Europäisches Patentamt

European Patent Office

Office européen des brevets

(11) Publication number: 0 340 924 A2

# (12) EUROPEAN PATENT APPLICATION

(21) Application number: 89303574.1

(22) Date of filing: 11.04.89

(51) Int. Cl.⁴: B32B 31/04 , B32B 17/00 , B29C 65/00 , B29C 67/18 , B29D 11/00 , H01J 29/86 , H05K 9/00 , B29C 51/14

(30) Priority: 06.05.88 GB 8810727

(43) Date of publication of application:
08.11.89 Bulletin 89/45

(84) Designated Contracting States:
BE CH DE ES FR GB IT LI NL SE

(71) Applicant: RFI SHIELDING LIMITED
Warner Drive Springwood Industrial Estate
Rayne Road
Braintree Essex CM7 7YW(GB)

(72) Inventor: Bright, Graham Stafford
6 Hadley Close Bocking
Braintree Essex CM7 5LP(GB)
Inventor: Claydon, Robert Charles
19 St Giles Crescent
Maldon Essex CM9 6HS(GB)
Inventor: Nightingale, Trevor Gordon
97 Chelmer Road
Witham Essex CM8 2ET(GB)

(74) Representative: Greene-Kelly, James Patrick
et al
Marks & Clerk 57-60 Lincoln's Inn Fields
London WC2A 3LS(GB)

(54) Method of forming a screen.

(57) A method of forming a screen, which includes first and second sheets of material 10, 12 is disclosed which includes the steps of forming a bond at a peripheral region of the first and second sheets 10, 12, using a layer of adhesive 14 so as to leave an unbonded region enclosed by the peripheral region. The bond is formed in the presence of a vacuum which, after forming leaves the unbonded region at a sub-atmospheric pressure, this forcing the first and second sheets into contact with one another, thus improving the strength, viewing and electrical characteristics of the screen.M

## METHOD OF FORMING A SCREEN

This invention relates to a method of forming a screen.

Screens, for example a RF screen for a visual display unit or as an anti-glare attachment or an ESD screen for such a unit may comprise first and second sheets of transparent material which are fused together.

In a first known method for forming such a screen, a sheet of plastics material is sandwiched between the sheets of transparent material and the sheets are bonded together to form a screen by application of a combination of high temperature and pressure in an autoclave. This produces a high quality screen but the method has the disadvantage of requiring expensive plant equipment which leads to high manufacturing cost.

In a second method for forming the screen, the first and second sheets of material are edge bonded by means of adhesive. Whilst this method is cheaper than producing a fully laminated screen, it has the disadvantage that, as the components are not fully bonded to one another, the overall strength of the screen is reduced. Furthermore, where a screening material such as a knitted or woven wire mesh is disposed between the sheets, the lack of clamping of the mesh which this type of screen provides can result, in high vibration applications, in mesh degradation ultimately producing both mechanical and electrical failure. Furthermore, as the two sheets of material are only edge bonded gaps between unbonded portions of the sheets can form leading to refraction, thus making the screen difficult to read.

According to the invention, there is provided a method of forming a screen which includes first and second sheets of material, the method comprising the steps of applying a bond in the presence of a vacuum at a peripheral region of said first and second sheets so as to leave an unbonded region enclosed by said peripheral region.

Preferably, the bonding step is carried out as part of a vacuum forming process.

Embodiments of the invention will now be described, by way of example, with reference to the accompanying drawings in which:

Figure 1 is a plan view of a screen formed in accordance with an embodiment of the method of invention

Figure 2 shows apparatus for performing a first embodiment of the method of the invention.

Figure 3 illustrates a variation of the screen shown in fig. 2.

Figure 4 shows a variation of the apparatus of figure 2, using a vacuum forming apparatus.

Figures 5a-5d show variations of edge structure of the screen.

Figures 6 and 7 are sectional views of different screens formed in accordance with an embodiment of the method of the invention.

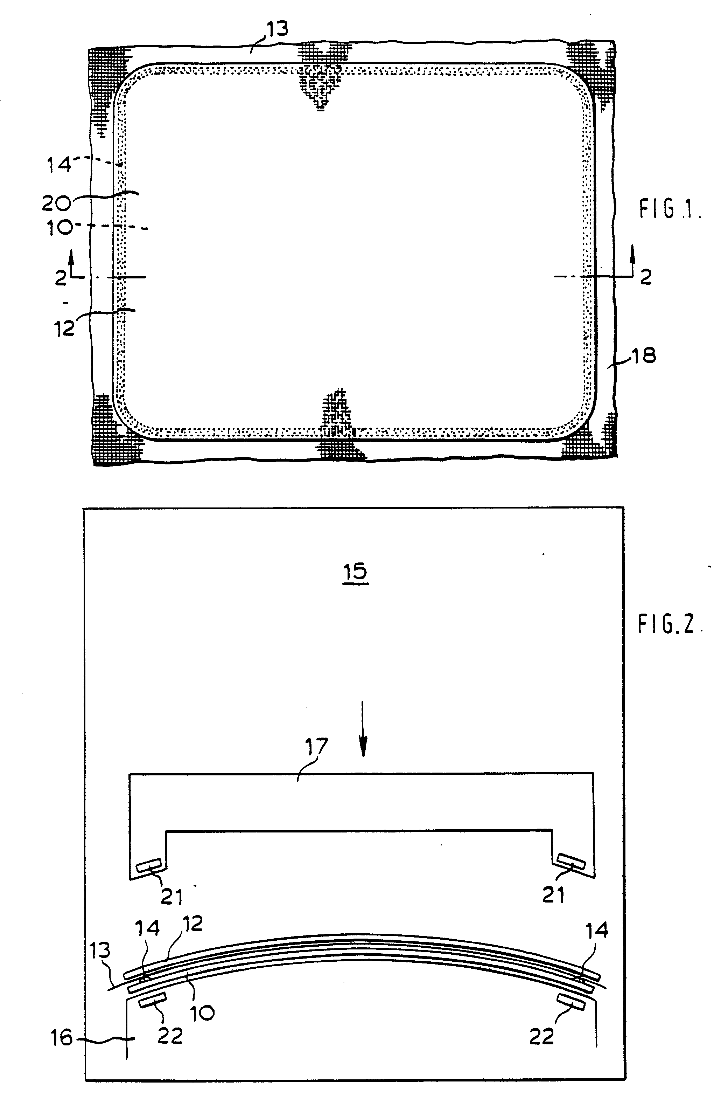

With reference to fig. 1, a screen formed by an embodiment of the method of the invention is shown. The screen comprises first and second sheets of transparent material 10, 12 (of which sheet 12 is shown) between which is sandwiched a sheet of screening material 13. The two sheets are joined together by a layer of adhesive 14 which is applied at a peripheral region of the sheets or screening material 13. The adhesive layer 14 encloses an unbonded region 20 which is at sub atmospheric pressure, this forcing the sheets 10, 12 into contact with one another thus providing a robust construction similar to a laminated screen.

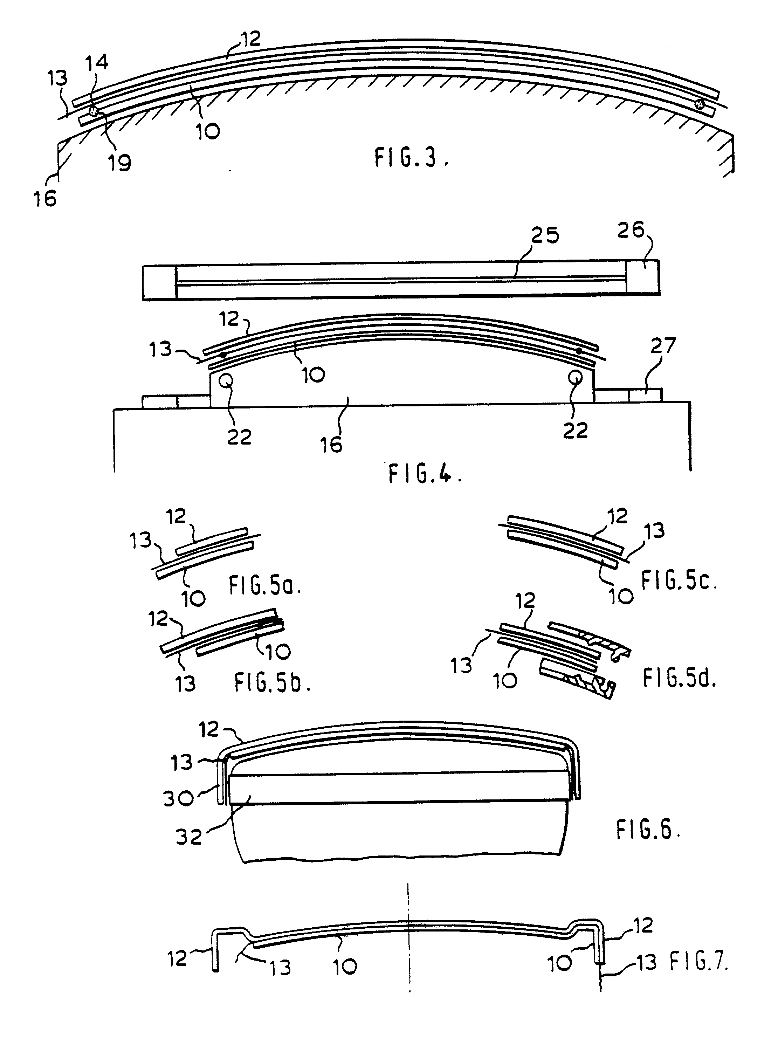

To form the screen, the first sheet 10, which is preferably vacuum formed is placed on a support 16 having peripheral heating/cooling elements 22, the support 16 being disposed in a vacuum chambers. The adhesive 14 is then placed around a peripheral region of the sheet 10 or screening material 13. The adhesive may be a hot melt adhesive and of cord preform, silk screen brush applied, die cut sheet preform or any other suitable construction or method of application. As shown, for example, in fig. 3, the sheet 10 may be provided with a peripheral groove 19 in which the adhesive 14 may be disposed.

The screening material 13, which may be mesh, knitted or woven wire or conductive textile or plastics material (having a good light and viewing transparency) is placed over the sheet 10 and adhesive 14. The second vacuum formed sheet 12 is then placed in position on top of the screening material 13.

The chamber is then evacuated to at least 800 m bar (80 k Pa) vacuum pressure and a pressure pad 17 having peripherally disposed heating/cooling elements 21 is placed against the top surface of the sheet 12 over the area of the hot melt adhesive 14.

The adhesive is remelted and flows through the screening material 13 to form a bond between the sheets 10 and 12 creating an evacuated sandwich.

The heat is then switched off and cooling applied via the pressure pad or support to reset the adhesive.

The chamber is then returned to atmospheric pressure.

As will be apparent from consideration of fig. 1, the adhesive has sealed the central region of the completed screen which is now held together by up to one atmosphere positive pressure which gives benefits comparable to those obtained by a full lamination process in that the screening material 13 is completely clamped, this reducing the risk of vibration induced degradation and furthermore reducing the resistance of the knitted or woven mesh by increasing the contact pressure and therefore reducing the electrical resistance of the cross over connections between strands. The absence of air between the sheets 10, 12 also reduces the risk of corrosion and delamination. The screen is stronger than the conventional edge bonded type and lighter than a corresponding fully laminated screen and also does not have the associated high capital equipment manufacturing requirements.

The sheets may be acrylic polycarbonate CAB Polyester, PUC or any vacuum forming grades of transparent plastics/polymeric material. The sheets can furthermore be of different types and thicknesses to achieve different mechanical requirements. A sheet or film material may be disposed front and/or rear of the sheets 10 and 12 to provide an anti reflective finish. Although blanks formed from transparent plastics material are preferred, one or both blanks may be formed from glass. The blanks may be coloured for contrast enhancement or to match colour transmission characteristics of a display.

In a preferred version of the above described method, the vacuum chamber can be part of a vacuum forming apparatus as shown schematically in figure 4. In this variation, the support former 16 is arranged to be moveable upwardly and becomes the 'mould' for forming each sheet from a flat sheet of plastics material, which is heated and inserted between the former 16, which is surrounded by a sealing ring 27, and a silicone rubber flexible member 25 surrounded by a sealing ring 26. The former 16 is raised until the ring 26 engages with the sealing ring 27 to enclose the former and plastics sheet. A vacuum is applied within the rings 26, 27 to force the flexible member 25 and plastics sheet into contact with the former 16 when this is raised.

Following this step, the former 16 is lowered and,the adhesive and mesh 13 are placed on the thus formed first sheet 10. The second sheet 12 is then vacuum formed in a similar manner to sheet 10, the adhesive being melted to form the bond, on contact with the second sheet 12, when the former 16 is raised.

Other screens which may be formed using the invention are shown, in figs. 3 and 4. In fig. 6, sheet 12 is arranged to overlap sheet 10 and form a clip 30 for engaging an earth strip 32 on a cathode ray tube 34. In fig. 7, two variations are shown for forming a complete bezel/window.

In the embodiments described above the adhesive may be completely replaced by ultrasonic or vibration welding, for example. Furthermore, if an adhesive is used, this could be UV cured, thermoset or a contact/pressure sensitive type. If a UV cured adhesive is used, the heating/cooling elements are replaced by UV lamps.

One or both formed blanks may have metallised materials sputter coated or vacuum deposited on one or both surfaces which would effectively replace the screening material 13, as a separate item and may also have an anti-reflective finish and/or a finish to reduce interference patterns between screen and tube.

Any known method may be used for finishing the screen and providing an external connection to the screening material 13, for example by applying self adhesive conductive tape around the edge of screen to connect with the protruding portion 18 of the screening media 13. Alternatively, a flying lead (ESD) may be provided, connected to the screening material by a stud inserted through an edge portion of the screen outside the adhesive layer. Conventional shielding gaskets may also be applied to the edge of the screen, for example, a RF gasket having a tadpole tail may be connected to the screening material before the sheets are bonded together. Some variations of edge structure to accomodate different gasket and finishing materials are shown in figures 5a-5c.

In another version, a clip over, snap together, edge trim as shown in figure 5d may be provided with points/teeth or similar to pierce the formed blanks and make electrical contact with the screening material (or metallised surface of a sputtered conductive film).

The foregoing methods may be applied to flat screens formed from the same range of materials.

## Claims

1. A method of forming a screen which includes first and second sheets of material (10, 12), the method being characterized by the steps of applying a bond in the presence of a vacuum at a peripheral region of said first and second sheets (10, 12) so as to leave an unbonded region enclosed by said peripheral region.

2. A method as claimed in claim 1 wherein said sheets are formed by a vacuum forming process.

3. A method as claimed in claim 2 further comprising the steps of forming a first said (10) sheet by the vacuum forming process on a mould (16), forming the second sheet (12) by the vacuum forming process on the same mould (16) as the first sheet (10) and forming the bond at the same time as forming said second sheet (12).

4. A method as claimed in any one of the preceding claims wherein the step of forming the bond comprises applying adhesive (14) at said peripheral region and maintaining the vacuum until the adhesive (14) has set.

5. A method as claimed in claim 4 wherein the adhesive (14) is a hot melt adhesive and the step of forming the bond includes the steps of heating the applied adhesive (14) until the melt point is reached and cooling the adhesive (14) in the presence of the vacuum to form the bond.

6. A method as claimed in claim 4 wherein the adhesive (14) is a UV cured, pressure sensitive or thermoset adhesive.

7. A method as claimed in any one of claims 1 to 4 wherein the bond is formed by ultrasonic or vibration welding of said two sheets of material (10, 12).

8. A method as claimed in any one of the preceding claims further comprising the step of placing a layer of screening material (13) between the first and second sheets (10, 12), prior to bonding.

9. A method as claimed in claim 8 wherein the screening material (13) comprises a mesh formed from knitted or woven wire or conductive textile material.

10. A method as claimed in any one of claims 1 to 7 further comprising the step of forming a layer of metallised material on one of the sheets (10, 12) prior to bonding.

11. A method as claimed in any one of the preceding claims wherein said first and second sheets of material (10, 12) are formed from transparent plastics material.

12. A method as claimed in claim 11 wherein the sheets (10, 12) are formed from different materials.

13. A method as claimed in claim 1 wherein at least one of said sheets of material (10, 12) is formed from glass.

14. A method as claimed in any one of the preceding claims wherein at least one said sheet of material is provided with an anti-reflective finish and/or a finish to reduce interference patterns between the screen and tube.

15. A method as claimed in any one of the preceding claims wherein at least one said sheet (10, 12) is formed from coloured material.

16. A screen as formed by the method of any one of the preceding claims.

17. A screen comprising first and second sheets of material (10, 12) characterized in that the sheets are bonded together at a peripheral region and have an unbonded region at sub-atmospheric pressure enclosed by said peripheral region.

18. A screen as claimed in claim 17 wherein at least one of said sheets (10, 12) forms a clip (30) for engagement with a component to which the screen is to be attached.

19. A screen as claimed in claim 17 wherein at least one of said sheets of material (12) forms an edge bezel surrounding a viewable area of the screen.

13

14

20

10

2

12

18

FIG.1.

15

FIG.2.

17

21

21

14 12

13

16

22

10

22

14

22

FIG.3.

FIG.4.

FIG.5a.

FIG.5b.

FIG.5c.

FIG.5d.

FIG.6.

FIG.7.